# EUROPEAN PATENT SPECIFICATION

(11) **EP 2 639 871 B1**
(45) Date of publication and mention of the grant of the patent: **03.09.2014**
(21) Application number: 13158569.7
(22) Date of filing: 11.03.2013
(51) Int. Cl.: H01M 8/04, H01M 8/06, H01M 8/24, H01M 8/12

(54) **Optimized heating of a reformer in a fuel cell apparatus**
Optimiertes Heizen eines Reformers in einer Brennstoffzellenvorrichtung
Chauffage optimisé d'un reformeur dans un appareil de pile à combustible

(30) Priority: 12.03.2012 JP 2012054975
(43) Date of publication of application: 18.09.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Endo, Satoshi, Kariya-shi,, Aichi 448-8650 (JP)
(74) Representative: TBK

(56) References cited:
- EP-A2- 1 553 653
- JP-A- 2005 332 762
- JP-A- 2008 066 127
- US-A1- 2008 081 233
- US-A1- 2009 280 370

## Description

### TECHNICAL FIELD

This disclosure generally relates to a fuel cell apparatus.

### BACKGROUND DISCUSSION

Each of JP2010-108827A, hereinafter referred to as Reference 1, and JP2008-66127A, hereinafter referred to as Reference 2, discloses a fuel cell apparatus including a reforming portion that generates hydrogen required for generating electricity arranged in a predetermined space above a stack that generates electricity. In the predetermined space, each of the fuel cell apparatuses in Reference 1 and Reference 2 burns a fuel gas that has not been used up in a process of generating electricity, which is known as an off gas, and air that has not been used up in the process of generating electricity, which is known as an off air, to supply heat energy required for a reforming reaction to take place in a reformer that is arranged above a portion where the off gas and the off air are burned. A combustion exhaust gas flows from a bottom wall of the reformer to a top wall of the reformer via side walls of the reformer such that the combustion exhaust gas heats the reformer.

As a general observation, in a case where a fuel cell apparatus uses solid oxide type fuel cells, reforming reactions may occur in a stack due to a material included in the stack, for example nickel (Ni). The reforming reaction is an endothermic reaction. Accordingly, in a state where an amount of the reforming reactions in the stack increases, temperature of the stack decreases so that efficiency of generating electricity in the stack may decrease as a result. Accordingly, in order to increase the efficiency of generating electricity in the stack, increasing a hydrogen conversion rate in a reformer to form an anode gas with enhanced hydrogen concentration is favorable.

Nevertheless, in each of arrangements according to Reference 1 and Reference 2, a combustion exhaust gas flows from a bottom wall of a reformer toward a top wall of the reformer so that heat exchange between the top wall of the reformer and the combustion exhaust gas is insufficient. Accordingly, maintaining temperature of reforming catalysts contained in the reformer at an appropriate temperature may be difficult. Especially at the top wall of the reformer, the heat exchange between the top wall and the combustion exhaust gas may be insufficient, which is considered as a limiting factor on increasing a hydrogen conversion rate in the reformer. In a state where reforming reactions, which are endothermic reactions, in a stack increase, an uneven distribution of temperature and a temperature decrease in the stack are induced so that efficiency of generating electricity in the stack decreases.

A need thus exists for a fuel cell apparatus increasing efficiency of heat exchange between a top wall of a reformer and a combustible gas or a combustion exhaust gas to increase efficiency of the reformer to receive heat from the top wall, which is advantageous in maintaining the reformer at an appropriate temperature.

### SUMMARY

According to an aspect of this disclosure, a fuel cell apparatus includes the features defined in claim 1.

Upon the arrangement described herewith, either by burning the combustible gas at the combusting portion or by allowing the combustion exhaust gas, which is a burned combustible gas, to pass through the combusting portion, the reformer is heated to the temperature region suitable for the reforming reaction to take place. A combustion flame or the combustion exhaust gas in the bottom heating space heats the bottom wall of the reformer. The combustion flame or the combustion exhaust gas in the side heating space heats the side wall of the reformer. The combustion flame or the combustion exhaust gas in the top heating space heats the top wall of the reformer. Accordingly, the reformer is heated to the temperature region suitable for the reforming reaction to take place. The fuel cell apparatus described herewith is provided with the first guiding portion arranged above the top wall of the reformer and facing the top wall of the reformer. The first guiding portion is arranged such that the first guiding portion guides the combustible gas or the combustion exhaust gas toward the top wall of the reformer so that the combustible gas or the combustion exhaust gas, which is guided into the top heating space from the side heating space of the reformer, efficiently makes contact with the top wall of the reformer. As a result, an amount of heat the top wall of the reformer receives increases and efficiency of heating the top wall of the reformer increases so that temperature in the reformer is maintained at an appropriate temperature. In addition, the reformer is restrained from being in a state where temperature of the top wall is excessively lower relative to the bottom wall or the side wall of the reformer. Accordingly, the reformer is restrained from being in a state where a distribution of temperature within the reformer is uneven and from reforming reactions taking place unevenly within the reformer. Furthermore, by the first guiding portion guiding the combustible gas or the combustion exhaust gas to flow toward the top wall of the reformer, an amount of heat exchanged between the top wall of the reformer and the combustible gas or the combustion exhaust gas increases. Accordingly, temperature of catalysts for reforming reactions arranged in the reformer at a portion near the top wall of the reformer is raised to a high temperature. As a result, reforming reactions of the fuel is appropriately allowed to take place and a hydrogen conversion rate of the fuel gas is increased. In a state where the reforming reactions of the fuel appropriately take place in the reformer, the fuel gas that did not go through the reforming reaction even after passing through the reformer is restrained from being directed to the stack. Accordingly, an amount of reforming reactions to take place in the stack is reduced. As a result, temperature of the stack is maintained at a high temperature and efficiency of generating electricity in the stack may be increased. Furthermore, in a state where an amount of heat exchanged between the combustible gas or the combustion exhaust gas and the top wall of the reformer has increased, temperature of the combustion exhaust gas after passing the reformer may be decreased. In other words, temperature of heat that preheats air, which is the cathode gas that flows in an outer most channel in a housing of the fuel cell apparatus, is lowered so that a surface temperature of the housing is lowered. Accordingly, an amount of heat discharged from the housing to an outside environment may be reduced, which may result in enhancing efficiency of electricity generation.

According to another aspect of this disclosure, the fuel cell apparatus further includes a wall portion arranged above the top heating space, the wall portion serving as the first guiding portion and as a flow channel forming member forming a cathode gas flow channel delivering an outside air serving as the cathode gas toward the stack, and the wall portion configured to transfer heat in the top heating space to the cathode gas flow channel by allowing heat exchange between the top heating space and the cathode gas flow channel.

Accordingly, heat in the top heating space and the cathode gas flow channel is exchanged between each other so that the cathode gas flowing in the cathode gas flow channel is supplied to the stack after being preheated.

According to further aspect of this disclosure, the fuel cell apparatus further includes the features defined in claim 3.

In a state where efficiency of heat exchange between the top heating space and the cathode gas flow channel is excessive, temperature of the combustion exhaust gas is lowered and efficiency of heating the top wall of the reformer may be decreased. Accordingly, in the cross section of the fuel cell apparatus described herewith taken along the direction of flow in the cathode gas flow channel and along the height direction of the reformer, the ceiling wall includes the second guiding protrusion protruding in a direction toward the wall portion. As in the cross section, the second guiding protrusion is arranged at the position at the upstream side of the flow of the cathode gas that flows in the cathode gas flow channel relative to the first guiding protrusion. In a state where such second guiding protrusion is provided, the cathode gas that flows in the cathode gas flow channel is biased in a direction such that the cathode gas flows in the direction that makes the cathode gas to flow away from the first guiding protrusion in the radial direction of the cathode gas flow channel at the position at the upstream side of the flow of the cathode gas that flows in the cathode gas flow channel relative to the first guiding protrusion. Accordingly, an amount of heat exchanged between the combustible gas or the combustion exhaust gas that flows in the top heating space and the cathode gas in the cathode gas flow channel is decreased around the first guiding protrusion. Accordingly, temperature of the top heating space is maintained as high as possible so that the temperature of the top wall of the reformer is maintained at a high temperature. As a result, the reforming reactions are appropriately allowed to take place in the reformer at the portion near the top wall.

According to another aspect of this disclosure, the top wall of the reformer of the fuel cell apparatus is formed in a flat form.

In order to increase an area to receive heat on the top wall of the reformer, forming the top wall in a corrugated plate form is favorable. The reforming chamber of the reformer contains carriers, for example ceramics carriers, supporting catalysts for the reforming reactions. In a form of particles or a honeycomb is an example of a form of the carriers. In a state where the top wall is formed in a corrugated plate form, making an entire space in the reforming chamber of the reformer to contain the carriers is difficult because unoccupied spaces are easily formed under raised portions of the corrugated form. In the unoccupied spaces, the fuel that should be reformed may pass through therein without going through a reforming reaction, which is a problem. Accordingly, the top wall of the reformer is formed in a flat form in order to restrain the fuel cell apparatus according to the disclosure from the problem described herewith.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic cross-sectional drawing illustrating inside of an exemplary fuel cell apparatus outside the terms of the claims;
Fig. 2 is a schematic cross-sectional drawing illustrating inside of the fuel cell apparatus according to a first embodiment;
Fig. 3 is a schematic cross-sectional drawing illustrating inside of the fuel cell apparatus according to a second embodiment;
Fig. 4 is a schematic cross-sectional drawing illustrating inside of the fuel cell apparatus according to a third embodiment;
Fig. 5 is a schematic cross-sectional drawing illustrating inside of the fuel cell apparatus according to a fourth embodiment; and
Fig. 6 is a schematic cross-sectional drawing illustrating a fuel cell system where a fuel cell apparatus applies.

### DETAILED DESCRIPTION

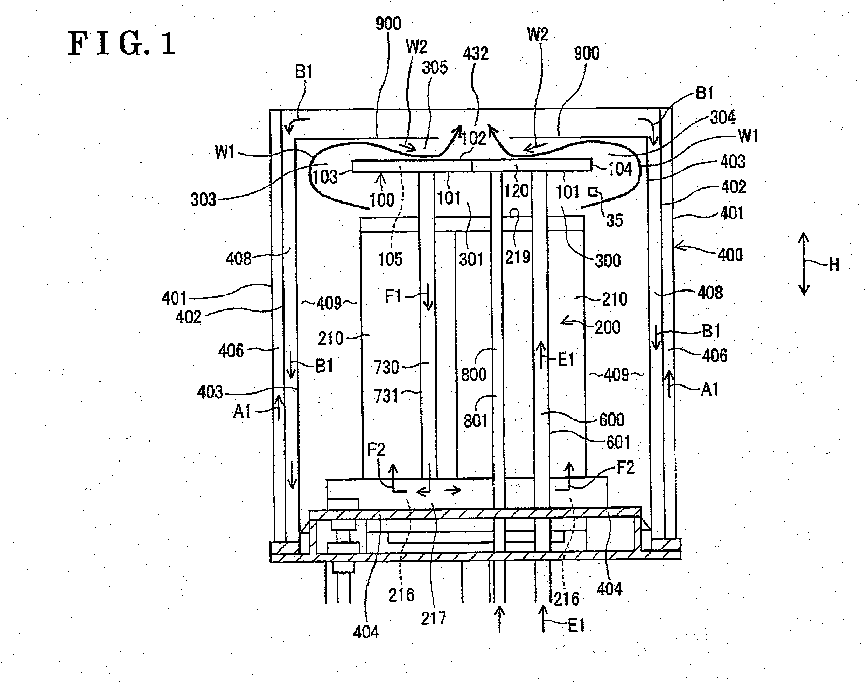

A exemplary fuel cell apparatus is described first. Fig. 1 is a schematic drawing illustrating a concept of the exemplary fuel cell apparatus. Fig. 1 is a cross sectional view of the fuel cell apparatus taken along a height direction H, which is indicated with an arrow. The fuel cell apparatus includes a reformer 100, a stack 200 of solid-oxide type fuel cells, which may be abbreviated as SOFC, a combusting portion 300, and a housing 400. The housing 400 includes an outer housing 401 on the outside, a middle housing 402 arranged inward relative to the outer housing 401, an inner housing 403 arranged inward relative to the middle housing 402, and a bottom housing 404 arranged at a bottom portion of the housing 400. The inner housing 403 forms an electricity generating room 409 containing the reformer 100 and the stack 200. The outer housing 401 and the middle housing 402 form a cathode gas flow channel 406 flowing a cathode gas, which is an outside air, to flow in a direction A1, which is indicated with an arrow. The middle housing 402 and the inner housing 403 form an exhaust gas flow channel 408 flowing a combustion exhaust gas at high temperature that is discharged from the electricity generating room 409 to flow in a direction B1, which is indicated with an arrow. The exhaust gas flow channel 408 is arranged inward relative to the cathode gas flow channel 406. The combustion exhaust gas in the exhaust gas flow channel 408 and the cathode gas in the cathode gas flow channel 406 exchange heat between each other. Accordingly, the combustion exhaust gas at high temperature is discharged outside after cooled by a heat exchange process. The cathode gas is supplied to cathodes of the stack 200 after heated by the heat exchange process.

As Fig. 1 illustrates, the stack 200 is arranged directly below the reformer 100 via a tank 217 that forms a tank chamber 216. The stack 200 is formed with a multiple number of cells 210 arranged adjacent to one another where each cell includes an anode, an electrolyte membrane, and a cathode. The anode is a fuel pole, which is formed by at least one of an alloy of nickel (Ni) and zirconium where zirconium is doped with at least one element selected from rare earth elements, for example, yttrium (Y) and scandium (Sc), an alloy of nickel (Ni) and cerium where cerium is doped with at least one element selected from rare earth elements, and an alloy of nickel (Ni) and lanthanum gallate where lanthanum gallate is doped with at least one element selected from strontium (Sr), magnesium (Mg), cobalt (Co), iron (Fe), and copper (Cu). The electrolyte membrane is formed by at least one of zirconia doped with at least one element selected from rare earth elements, for example, yttrium (Y) and scandium (Sc), cerium doped with at least one element selected from rare earth elements, and lanthanum gallate doped with at least one element selected from strontium (Sr) and magnesium (Mg). The cathode is formed by at least one of lanthanum manganite doped with at least one element selected from strontium (Sr) and calcium (Ca) and lanthanum ferrite doped with at least one element selected from strontium (Sr), cobalt (Co), nickel (Ni), and copper (Cu). Note that elements to form the anode, the electrolyte membrane, and the cathode are not limited to the aforementioned elements.

The stack 200 generates electricity in a state where the stack 200 is supplied with an anode gas, which is generated in the reformer 100, and the cathode gas, which is air. The bottom housing 404 includes the tank 217 provided with the tank chamber 216 for distributing the anode gas to each of anodes in the stack 200.

As Fig. 1 illustrates, the reformer 100 is arranged at an upward position in the electricity generating room 409 so that the reformer 100 is positioned above the stack 200. The reformer 100 includes a bottom wall 101 formed in a flat form, a top wall 102 formed in a flat form facing the bottom wall 101, a first side wall 103, which serves as a side wall, formed in a flat form that connects the bottom wall 101 and the top wall 102, and a second side wall 104, which serves as a side wall, formed in a flat form that connects the bottom wall 101 and the top wall 102. The reformer 100 includes a reforming chamber 105 where a fuel gas is reformed by water vapors to generate the anode gas containing hydrogen as main component. The reforming chamber 105 contains ceramics carriers 110 formed in a form of particles, powders, or a honeycomb. The reformer 100 is integrally formed with an evaporating portion 120 where water for reforming reactions is heated to convert to the water vapors.

The combusting portion 300 heats the reformer 100 to a temperature region suitable for reforming reactions to take place either by burning a combustible gas, which may be the fuel gas, or by allowing the combustion exhaust gas, which is a burned combustible gas, to pass through. In a state where electricity generation is in progress, an anode off gas serves as the combustible gas. The anode off gas is the anode gas after a reaction to generate electricity is allowed to take place where the anode gas is the gas generated by the reforming reactions in the reformer 100. In a state where the fuel cell apparatus is at a time of startup, which is in a state before the electricity generation has started, the fuel gas itself before reformed, for example a city gas, serves as the combustible gas. The anode off gas contains hydrogen that is not consumed in the reaction to generate electricity so that the anode off gas is combustible. In a state where the fuel cell apparatus is at the time of startup, which is in a state where temperature of the reformer 100 is low, the reforming reactions in the reformer 100 do not take place so that the fuel gas itself before reformed is supplied to the combusting portion 300 and burned thereat.

As Fig. 1 illustrates, the combusting portion 300 forms a bottom heating space 301 facing the bottom wall 101 of the reformer 100 that heats the bottom wall 101, a side heating space 303 facing the first side wall 103 of the reformer 100 that heats the first side wall 103, a side heating space 304 facing the second side wall 104 of the reformer 100 that heats the second side wall 104, and a top heating space 305 facing the top wall 102 of the reformer 100 that heats the top wall 102. The bottom heating space 301 is formed between the bottom wall 101 of the reformer 100 and a top surface 219 of the stack 200.

A gas pipe 601 forming a fuel gas flow channel 600 supplies the fuel gas from a fuel source to an inlet opening of the reformer 100. A water supply pipe 801 forming a water supply flow channel 800 supplies water for reforming reactions from a water supply source to the evaporating portion 120 provided at a position in a direction of the water inlet opening in the reformer 100. The gas pipe 601 and the water supply pipe 801 are arranged to extend from a downward portion of the electricity generating room 409 to an upward portion of the electricity generating room 409. In the electricity generating room 409, an anode gas pipe 731 forming an anode gas flow channel 730 is arranged. In the anode gas flow channel 730, the anode gas containing hydrogen generated in the reformer 100 flows toward the tank 217.

At the time of startup of the fuel cell apparatus, the fuel gas that is flowing in a direction E1, which is indicated with an arrow, is supplied from the fuel gas flow channel 600 to the reformer 100. Nevertheless, because the reformer 100 is in a relatively low temperature state at the time of startup of the fuel cell apparatus, the fuel gas is not reformed in the reformer 100. Accordingly the fuel gas flows from the anode gas flow channel 730 along directions F1, F2, which are indicated with arrows, so that the fuel gas flows into the tank chamber 216 of the tank 217 and is supplied to each of the anodes in the stack 200. The fuel gas then rises within the anodes and is supplied to the bottom heating space 301 from the top surface 219 of the stack 200. An outside air is also supplied from the cathode gas flow channel 406 to downward portions of the cathodes in the stack 200 via a flow channel. The outside air then rises within the cathodes and is supplied to the bottom heating space 301 from the top surface 219 of the stack 200. In a state where an ignition portion 35 in the bottom heating space 301 is ignited, the fuel gas is burned in the bottom heating space 301 to heat the bottom wall 101 of the reformer 100. The fuel gas that has not burned flows in a direction W1, which is indicated with an arrow, from the bottom heating space 301 to the side heating spaces 303, 304 and then flows into the top heating space 305 and burned therein. The combustion exhaust gas, which is generated by the fuel gas burned in the bottom heating space 301, flows in the direction W1 from the bottom heating space 301 into the side heating spaces 303, 304 and then flows into the top heating space 305. In other words, the combustible gas or the combustion exhaust gas flows from the bottom heating space 301 of the combusting portion 300 in the direction W1 and reaches the exhaust gas flow channel 408 through an opening 432 of the inner housing 403. The combustible gas or the combustion exhaust gas then flows in the exhaust gas flow channel 408 in a direction B1, which is indicated with an arrow, and discharged to outside from an exhaust opening.

In the exemplary fuel cell apparatus, as Fig. 1 illustrates, at a portion in an upward direction of the top heating space 305, baffle plates 900, each of which serves as a first guiding portion, are fixed at upper end portions of the inner housing 403. Each of the baffle plates 900 is formed in a flat plate form and functions as a baffle board member. Each of the baffle plates 900 is arranged at a portion in the upward direction of the reformer 100 in a state where each of the baffle plates 900 is facing the top wall 102 of the reformer 100. In a state where the combustible gas or the combustion exhaust gas that has risen from the bottom heating space 301 and guided into the top heating space 305 via the side heating spaces 303, 304 hits the baffle plates 900, the combustible gas or the combustion exhaust gas is reflected by the baffle plates 900 and biased downward in a direction W2, which is indicated with an arrow. As a result, the combustible gas or the combustion exhaust gas is guided toward the top wall 102 of the reformer 100. Accordingly, the combustible gas or the combustion exhaust gas that has entered the top heating space 305 efficiently makes contact with the top wall 102 of the reformer 100. Accordingly, the baffle plates 900 enhance a contact state between the combustible gas or the combustion exhaust gas and the top wall 102 of the reformer 100.

Upon the arrangement of the exemplary fuel cell apparatus, the baffle plates 900 make the combustible gas or the combustion exhaust gas to flow toward the top wall 102 of the reformer 100 so that an amount of heat exchanged between the combustible gas or the combustion exhaust gas and the top wall 102 of the reformer at the top wall 102 of the reformer 100 increases. In other words, an amount of heat that the top wall 102 of the reformer 100 receives from the combustible gas or the combustion exhaust gas increases. Accordingly, in the reforming chamber 105 of the reformer 100, temperature of the ceramics carriers 110 arranged at a portion near the top wall 102 is maintained as high as possible so that the temperature of catalysts for reforming reactions that are supported on the ceramics carriers 110 is maintained as high as possible. Accordingly, reforming reactions of the fuel gas in the reforming chamber 105 of the reformer 100 are appropriately allowed to take place, which may result in an advantage of enhancing a hydrogen conversion rate of the fuel gas. A form of each of the baffle plates 900 is not limited to a flat plate form and each of the baffle plates 900 may be formed in a corrugated plate form. In other words, the baffle plates 900 are considered appropriate in a state where the baffle plates 900 guide the combustible gas or the combustion exhaust gas toward the top wall 102 of the reformer 100.

Upon the arrangement of the exemplary fuel cell apparatus, the reforming reactions in the reformer 100, which are endothermic reactions, are appropriately allowed to take place so that most of the gas discharged from the reformer 100 is the gas that went through the reforming reactions. Accordingly, an amount of the reforming reactions to take place in the stack 200 may be reduced and temperature in the stack 200 may be maintained at a high temperature. Accordingly, efficiency of generating electricity in the stack 200 may be increased. Furthermore, an amount of heat exchanged between the combustible gas or the combustion exhaust gas and the top wall 102 of the reformer 100 increases. Accordingly, temperature of the combustion exhaust gas after the combustion exhaust gas has passed the top wall 102 of the reformer 100 may be decreased as much as possible. Accordingly, the temperature of the combustion exhaust gas that is flowing in the exhaust gas flow channel 408 may be restrained from overheating. As a result, the amount of heat discharged from the outer housing 401 to an outside environment may be decreased, which may result in enhancing efficiency of electricity generation.

As Fig. 1 illustrates, the top wall 102 of the reformer 100 is formed in a flat form. In order to increase an area to receive heat on the top wall 102 of the reformer 100, forming the top wall 102 in a corrugated plate form is favorable. The reforming chamber 105 of the reformer 100 contains carriers, for example ceramics carriers 110, supporting catalysts for the reforming reactions. In a form of particles or a honeycomb is an example of a form of the ceramics carriers 110. The top wall 102 formed in a corrugated plate form provides a restriction on containing the carriers to an entire space in the reforming chamber 105 of the reformer 100 as unoccupied spaces may be easily formed under raised portions of the corrugated plate form. In the unoccupied spaces, a fuel that should be reformed may pass through therein without going through a reforming reaction, which is a problem. Accordingly, the top wall 102 of the reformer 100 is formed in a flat form in order to restrain the exemplary fuel cell apparatus from the problem described herewith.

Note that, the stack 200, the reformer 100, the combusting portion 300 and the housing 400 are arranged to extend along a thickness direction of the surface where Fig. 1 is drawn. The baffle plates 900 are arranged to extend similarly. The baffle plates 900 serve also as partitioning walls to form a channel to flow a cathode gas in the top heating space 305 arranged above the top wall 102. The inner housing 403 may be provided with a partitioning wall to form a channel to flow the cathode gas above the baffle plates 900.

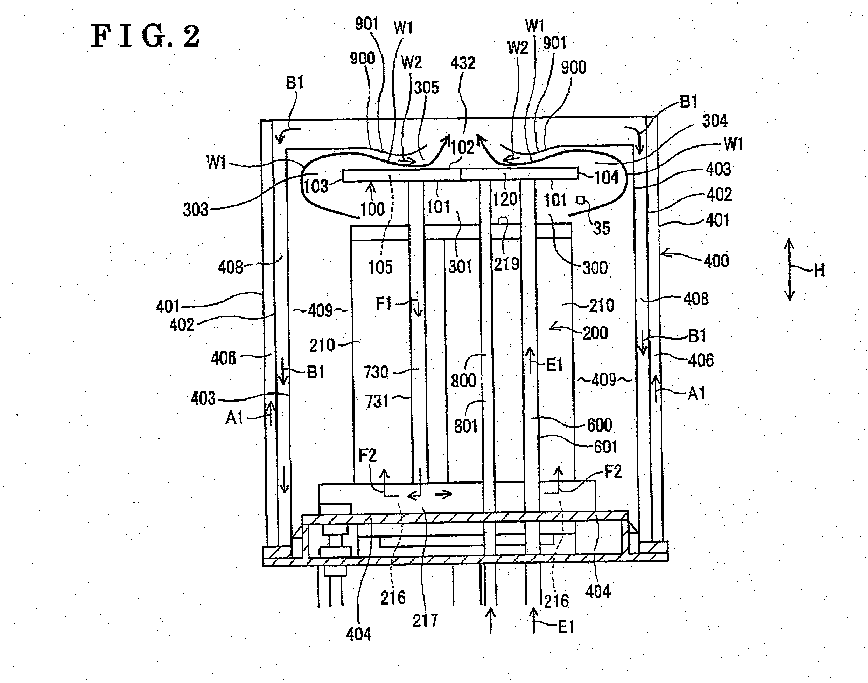

The fuel cell apparatus according to a first embodiment is described next. Fig. 2 illustrates the fuel cell apparatus according to the first embodiment. The fuel cell apparatus according to the first embodiment is basically arranged with a similar configuration, arranged to operate similarly, and provides similar advantages relative to the aforementioned exemplary fuel cell apparatus. Each of baffle plates 900 is provided with a guiding protrusion 901 protruding in a direction approaching toward a top wall 102 of a reformer 100. In a state where the combustible gas or the combustion exhaust gas rises from a bottom heating space 301 and guided into a top heating space 305 via side heating spaces 303, 304 and hits the baffle plates 900, the combustible gas or the combustion exhaust gas is reflected by the baffle plates 900 and biased downward in a direction W2, which is indicated with an arrow. As a result, the combustible gas or the combustion exhaust gas is guided toward the top wall 102 of the reformer 100. Especially due to the presence of the guiding protrusions 901, the combustible gas or the combustion exhaust gas is guided toward the top wall 102 of the reformer 100 so that the combustible gas or the combustion exhaust gas efficiently makes contact with the top wall 102 of the reformer 100. Accordingly, the baffle plates 900 provided with the guiding protrusions 901 enhance a contact state between the combustible gas or the combustion exhaust gas and the top wall 102 of the reformer 100. Note that, the baffle plates 900 serve also as partitioning walls to form a channel to flow a cathode gas in the top heating space 305 that is provided above the top wall 102. An inner housing 403 may be provided with a partitioning wall to form a channel to flow the cathode gas above the baffle plates 900.

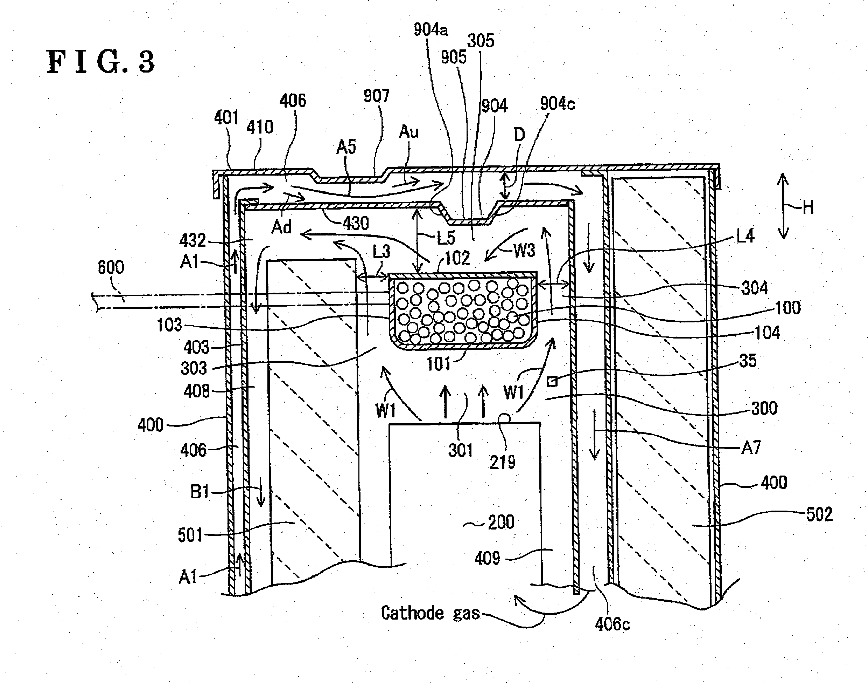

The fuel cell apparatus according to a second embodiment is described next. Fig. 3 is a schematic drawing illustrating a concept of the fuel cell apparatus according to the second embodiment. The fuel cell apparatus according to the second embodiment is basically arranged with a similar configuration, arranged to operate similarly, and provides similar advantages relative to the aforementioned exemplary fuel cell apparatus. As Fig. 3 illustrates, the fuel cell apparatus includes a reformer 100, a stack 200 of solid-oxide type fuel cells, which may be abbreviated as SOFC, a combusting portion 300, a housing 400, a first heat insulating layer 501 restraining heat release, and a second heat insulating layer 502 restraining heat release. As Fig. 3 illustrates, the combusting portion 300 heats the reformer 100 to a temperature region suitable for a reforming reaction either by burning a combustible gas or the fuel gas or by allowing a combustion exhaust gas that is a burned combustible gas to pass through. In a state where electricity generation is in progress, an anode off gas serves as the combustible gas. The anode off gas is the anode gas after a reaction to generate electricity is allowed to take place where the anode gas is the gas generated by reforming reactions in the reformer 100. In a state where the fuel cell apparatus is at a time of startup, which is in a state before electricity generation has started, the fuel gas itself before reformed serves as the combustible gas. In a state where the fuel cell apparatus is at the time of startup, which is a state where temperature of the reformer 100 is low, the reforming reactions in the reformer 100 do not take place so that the fuel gas itself before reformed is supplied to the combusting portion 300 and burned thereat.

As Fig. 3 illustrates, the combusting portion 300 forms a bottom heating space 301 facing the bottom wall 101 of the reformer 100, which is made of metal, that heats the bottom wall 101, a side heating space 303 facing a first side wall 103 of the reformer 100 that heats the first side wall 103, a side heating space 304 facing a second side wall 104 of the reformer 100 that heats the second side wall 104, and a top heating space 305 facing a top wall 102 of the reformer 100 that heats the top wall 102. The bottom heating space 301 is formed between the bottom wall 101 of the reformer 100 and a top surface 219 of the stack 200.

At the time of startup of the fuel cell apparatus, the fuel gas is supplied from a fuel gas flow channel 600 to the reformer 100. Nevertheless, because the reformer 100 is in a relatively low temperature state at the time of start up of the fuel cell apparatus, the fuel gas is not reformed. The fuel gas is supplied to a downward portion of each of anodes in the stack 200 via a flow channel and then rises within the anodes and discharged to the bottom heating space 301 from the top surface 219 of the stack 200. An outside air is also supplied from a cathode gas flow channel 406 to downward portions of cathodes in the stack 200 via a flow channel 406c that is arranged along a vertical direction where the outside air flows in a direction A7, which is indicated with an arrow. Furthermore, the outside air rises within the cathodes and discharged to the bottom heating space 301 from the top surface 219 of the stack 200. At the time of startup of the fuel cell apparatus, an ignition portion 35 arranged at the combusting portion 300 is ignited so that the fuel gas, which is a combustible gas, is burned in the bottom heating space 301 to heat the bottom wall 101 of the reformer 100. The fuel gas that has not burned, where the fuel gas is a combustible gas, flows in a direction W1, which is indicated with an arrow, from the bottom heating space 301 into the side heating spaces 303, 304 and then flows into the top heating space 305 and burned therein.

The combustion exhaust gas, which is generated by the fuel gas burned in the bottom heating space 301, flows into the side heating spaces 303, 304 from the bottom heating space 301 and then flows into the top heating space 305 and burned therein. In other words, the combustible gas or the combustion exhaust gas flows from the bottom heating space 301 of the combusting portion 300 in the direction W1, which is indicated with an arrow, and reaches an exhaust gas flow channel 408 through an opening 432. The combustible gas or the combustion exhaust gas then flows in the exhaust gas flow channel 408 in a direction B1, which is indicated with an arrow, and discharged to outside from an exhaust opening. Note that, as Fig. 3 illustrates, the top wall 102 of the reformer 100 is formed in a flat form and not in a corrugated plate form. Accordingly, a reforming chamber 105 of the reformer 100 is advantageous in containing carriers to an entire space in the reforming chamber 105.

In the fuel cell apparatus according to the second embodiment, as Fig. 3 illustrates, a wall portion 430, which is a part of the inner housing 403, is arranged at a portion in an upward direction of the top heating space 305. The wall portion 430 includes a first rib 904, which serves as a first guiding protrusion. The first rib 904 is arranged at a position above the top wall 102 of the reformer 100. The first rib 904 includes slanted surfaces 904a, 904c and a recessed portion 905 that opens in a direction of the cathode gas flow channel 406. The first rib 904 is formed above the top wall 102 of the reformer 100 such that the first rib 904 protrudes downward in a direction toward the top wall 102 of the reformer 100 from the wall portion 430 and faces the top wall 102 of the reformer 100. The combustible gas or the combustion exhaust gas rises from the bottom heating space 301 and guided along the direction W1, which is indicated with an arrow, into the top heating space 305 via the side heating space 304 and hits the first rib 904. Then, the combustible gas or the combustion exhaust gas is guided by the first rib 904 and biased downward in a direction W3, which is indicated with an arrow. As a result, the combustible gas or the combustion exhaust gas is guided toward the top wall 102 of the reformer 100. Accordingly, the combustible gas or the combustion exhaust gas that has entered the top heating space 305 efficiently makes contact with the top wall 102 of the reformer 100. Accordingly, the first rib 904 enhances a contact state between the combustible gas or the combustion exhaust gas and the top wall 102 of the reformer 100. As a result, efficiency of the top wall 102 to receive heat is increased so that temperature in the reformer 100 at a portion in a direction of the top wall 102, which is the portion near the top wall 102, is increased.

In the fuel cell apparatus according to the second embodiment, as Fig. 3 illustrates, a ceiling wall 410 is arranged as a part of the outer housing 401 at a portion in the upward direction of the wall portion 430, which is made of metal. The cathode gas flow channel 406 is formed by an inner surface of the ceiling wall 410 and an outer surface of the wall portion 430. Each of the ceiling wall 410 and the wall portion 430 is made of metal and serves as a flow channel forming member.

Fig. 3 is a cross-sectional drawing illustrating the fuel cell apparatus according to the second embodiment taken along a direction A5 that is indicated with an arrow, which is a direction of flow in the cathode gas flow channel 406, and along a height direction H of the reformer 100, which is a direction indicated with an arrow. As the cross-sectional drawing of Fig. 3 illustrates, the ceiling wall 410 includes a second rib 907, which serves as a second guiding protrusion, protruding in a direction toward the wall portion 430. As the cross-sectional drawing of Fig. 3 illustrates, the second rib 907 is provided for a purpose of flowing the cathode gas that flows in the direction A5 in the cathode gas flow channel 406 to flow in a direction away from the first rib 904 in a direction D, which is a radial direction of the cathode gas flow channel 406 indicated with an arrow. The second rib 907 is arranged at a position at an upstream side of the flow of the cathode gas that flows in the cathode gas flow channel 406 relative to the first rib 904 where the cathode gas flows in the direction A5.

Furthermore, the wall portion 430 is arranged so that heat may be exchanged between the top heating space 305 above the reformer 100 and the cathode gas flow channel 406. In a state where efficiency of heat exchange between the top heating space 305 and the cathode gas flow channel 406 is excessive, the cathode gas before supplied to the stack 200 is preheated through the heat exchange process, however, temperature of the combustion exhaust gas may be lowered, which is a problem. In a state where the temperature of the combustion exhaust gas is lowered, efficiency of heating the top wall 102 of the reformer 100 may be decreased so that temperature of the top wall 102 may become lower and may result in a problem of uneven reforming reactions taking place in the reformer 100.

Accordingly, in the fuel cell apparatus according to the second embodiment, as Fig. 3 illustrates, a clearance having a distance L3 is defined in the side heating space 303, a clearance having a distance L4 is defined in the side heating space 304, and a clearance having a distance L5 is defined in the top heating space 305 where the distance L5 is greater than the distance L3, which is a relationship that may be indicated as L5 > L3, and the distance L5 is greater than the distance L4, which is a relationship that may be indicated as L5 > L4. In a state where the distance L5 of the clearance in the top heating space 305 is increased, the top wall 102 of the reformer 100 is arranged at a position away from the cathode gas flow channel 406 where the cathode gas having a relatively low temperature flows. Accordingly, while the top heating space 305 and the cathode gas flow channel 406 are allowed to exchange heat between each other, the heat exchange between the top heating space 305 and the cathode gas flow channel 406 is restrained from becoming excessively efficient. As a result, the temperature at the top wall 102 in the top heating space 305 is maintained at a considerably high temperature, which serves to maintain the temperature in the reformer 100 at a portion near the top wall 102, so that the reformer 100 is restrained from the problem of uneven reforming reactions taking place.

Furthermore, as Fig. 3 illustrates, providing the first rib 904 is advantageous in guiding the combustible gas or the combustion exhaust gas in the top heating space 305 to approach the top wall 102 of the reformer 100. Nevertheless, the first rib 904, which is made of metal and having heat conductive characteristics, is provided with a feature that makes the first rib 904 physically closer to the top wall 102 of the reformer 100. Accordingly, restraining the heat exchange between the top heating space 305 and the cathode gas flow channel 406 at the first rib 904 from becoming excessively efficient is favorable.

Thus, in the fuel cell apparatus according to the second embodiment, the ceiling wall 410 arranged at a portion in the upward direction relative to the wall portion 430 includes the second rib 907, which serves as the second guiding protrusion, protruding in the direction toward the wall portion 430. As the cross-sectional drawing of Fig. 3 illustrates, the second rib 907 is arranged at a position at an upstream side of the flow of the cathode gas that flows in the cathode gas flow channel 406 relative to the first rib 904 where the cathode gas flows in the direction A5 that is indicated with an arrow. Accordingly, the cathode gas that flows in the direction A5 is guided downward in a direction Ad, which is indicated with an arrow in Fig. 3, as the cathode gas approaches the second rib 907. The cathode gas then hits the wall portion 430 and reflected such that the cathode gas is biased upward. As a result, the cathode gas flowing in the cathode gas flow channel 406 is guided upward, which is in a direction Au, which is indicated with an arrow in Fig. 3, after passing a position of the second rib 907. In other words, the cathode gas that flows in the cathode gas flow channel 406 in the direction A5 is guided to flow in a direction away from the recessed portion 905 of the first rib 904 as much as possible in the direction D, which is the radial direction of the cathode gas flow channel 406 indicated with an arrow.

As a result, the flow of the cathode gas tends to be restrained at a portion near the recessed portion 905 of the first rib 904. Accordingly, an amount of heat exchanged by heat exchange is restrained between the combustible gas or the combustion exhaust gas that flows in the top heating space 305 and the cathode gas in the recessed portion 905 in the cathode gas flow channel 406, which is advantageous in maintaining the temperature of the top heating space 305 as high as possible. As a result, the temperature at the top wall 102 in the top heating space 305 is maintained at a high temperature, which is advantageous in allowing efficient reforming reactions to take place in the reformer 100 at a portion near the top wall 102.

Note that in the fuel cell apparatus according to the second embodiment, similarly to the fuel cell apparatus according to other embodiment and the exemplary fuel cell apparatus, the stack 200, the reformer 100, the combusting portion 300 and the housing 400 are arranged to extend along a thickness direction of the surface where Fig. 3 is drawn. The first rib 904 and the second rib 907 are arranged to extend similarly. Accordingly, the first rib 904 may serve to strengthen the wall portion 430 and the second rib 907 may serve to strengthen the ceiling wall 410 so that the wall portion 430 and the ceiling wall 410 are allowed to be made thinner while restraining a size of the cathode gas flow channel 406 from changing in the radial direction.

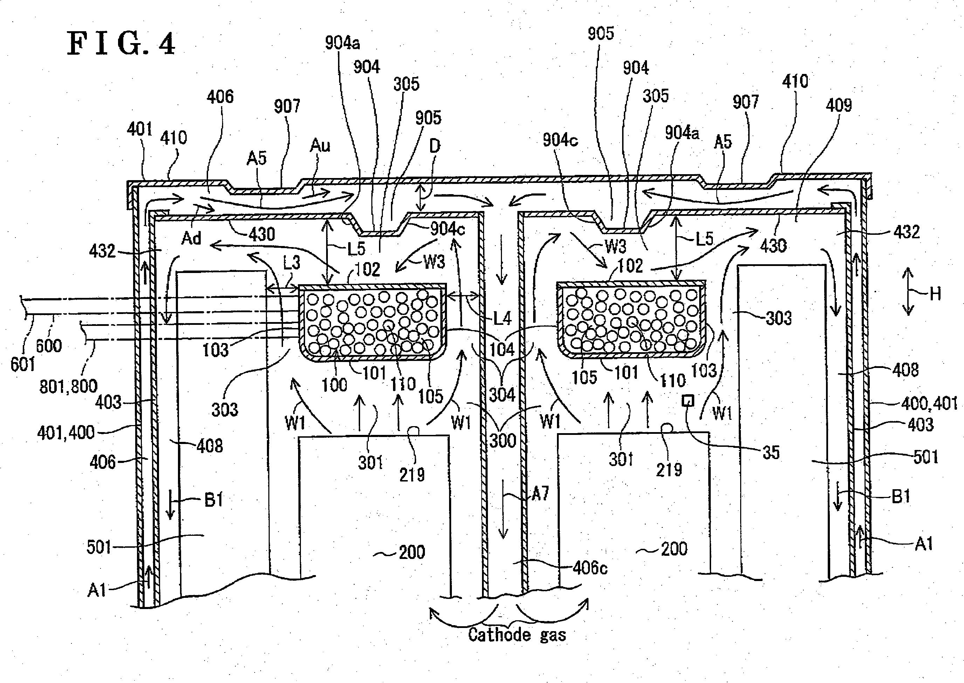

The fuel cell apparatus according to a third embodiment is described next. Fig. 4 is a schematic drawing illustrating a concept of the fuel cell apparatus according to the third embodiment. The fuel cell apparatus according to the third embodiment is basically arranged with a similar configuration, arranged to operate similarly, and provides similar advantages relative to the fuel cell apparatus according to the aforementioned first and second embodiments. The fuel cell apparatus includes a reformer 100, a stack 200 of solid-oxide type fuel cells (SOFC), a combusting portion 300, and a housing 400. The housing 400 includes an outer housing 401 on the outside and an inner housing 403 arranged inward relative to the outer housing 401. The inner housing 403 forms an electricity generating room 409 that houses a first heat insulating layer 501, a reformer 100, and a stack 200. The outer housing 401 and the inner housing 403 form a cathode gas flow channel 406 flowing a cathode gas, which is an outside air, to flow in a direction A1, which is indicated with an arrow. The inner housing 403 and the first heat insulating layer 501 form an exhaust gas flow channel 408 flowing a combustion exhaust gas at high temperature that is discharged from the electricity generating room 409 to flow in a direction B1, which is indicated with an arrow. The exhaust gas flow channel 408 is arranged inward relative to the cathode gas flow channel 406. The combustion exhaust gas in the exhaust gas flow channel 408 and the cathode gas in the cathode gas flow channel 406 exchange heat between each other. Accordingly, the combustion exhaust gas at high temperature is discharged to outside after cooled through a heat exchange process. The cathode gas is supplied to cathodes of the stack 200 after heated through the heat exchange process. The stack 200 is formed with a multiple number of cells 210 arranged adjacent to one another where each cell includes an anode, an electrolyte membrane, and a cathode. The stack 200 generates electricity in a state where the stack 200 is supplied with an anode gas, which is generated in the reformer 100, and the cathode gas, which is air.

As Fig. 4 illustrates, the reformer 100 is arranged at an upward position in the electricity generating room 409 so that the reformer 100 is positioned above the stack 200. The reformer 100 includes a bottom wall 101 formed in a flat form, a top wall 102 formed in a flat form facing the bottom wall 101, a first side wall 103, which serves as a side wall, formed in a flat form that connects the bottom wall 101 and the top wall 102, and a second side wall 104, which serves as a side wall, formed in a flat form that connects the bottom wall 101 and the top wall 102.

The reformer 100 includes a reforming chamber 105 where a fuel gas is reformed by water vapors to generate the anode gas containing hydrogen as main component. The reforming chamber 105 contains ceramics carriers 110 supporting catalysts for the reforming reactions formed in a form of particles, powders, or a honeycomb. The reformer 100 is integrally formed with an evaporating portion 120 where water for reforming reactions is heated to convert to the water vapors.

As Fig. 4 illustrates, a combusting portion 300 heats the reformer 100 to a temperature region suitable for reforming reactions to take place either by burning a combustible gas, which may be the fuel gas, or by allowing a combustion exhaust gas, which is a burned combustible gas, to pass through. In a state where electricity generation is in progress, an anode off gas serves as the combustible gas. The anode off gas is the anode gas after a reaction to generate electricity is allowed to take place where the anode gas is the gas generated by the reforming reactions in the reformer 100. In a state where the fuel cell apparatus is at a time of startup, which is in a state before the electricity generation has started, the fuel gas itself before reformed serves as the combustible gas. In a state where the fuel cell apparatus is at the time of startup, which is a state where temperature of the reformer 100 is low, the reforming reactions in the reformer 100 do not take place so that the fuel gas itself before reformed is supplied to the combusting portion 300 and burned thereat.

As Fig. 4 illustrates, the combusting portion 300 forms a bottom heating space 301 facing the bottom wall 101 of the reformer 100 that heats the bottom wall 101, a side heating space 303 facing the first side wall 103 of the reformer 100 that heats the first side wall 103, a side heating space 304 facing the second side wall 104 of the reformer 100 that heats the second side wall 104, and a top heating space 305 facing the top wall 102 of the reformer 100 that heats the top wall 102. The bottom heating space 301 is formed between the bottom wall 101 of the reformer 100 and a top surface 219 of the stack 200.

At the time of startup of the fuel cell apparatus, the fuel gas is supplied from the fuel gas flow channel 600 to the reformer 100. Nevertheless, because the reformer 100 is in a relatively low temperature state at the time of startup of the fuel cell apparatus, the fuel gas is not reformed. The fuel gas is supplied to a downward portion of each of the anodes in the stack 200 via a flow channel and then rises within the anodes and discharged to a bottom heating space 301 from the top surface 219 of the stack 200. An outside air is also supplied from the cathode gas flow channel 406 to downward portions of the cathodes in the stack 200 via a flow channel. The outside air rises within the cathodes and discharged to the bottom heating space 301 from the top surface 219 of the stack 200. At the time of startup of the fuel cell apparatus, an ignition portion 35 arranged at the combusting portion 300 is ignited so that the fuel gas is burned in the bottom heating space 301 to heat the bottom wall 101 of the reformer 100. The fuel gas that has not burned flows in a direction W1, which is indicated with an arrow, from the bottom heating space 301 into the side heating spaces 303, 304 and then flows into the top heating space 305 and burned therein. The combustion exhaust gas, which is generated by the fuel gas burned in the bottom heating space 301, flows into the side heating spaces 303, 304 from the bottom heating space 301 and then flows into the top heating space 305 and burned therein. In other words, the combustible gas or the combustion exhaust gas flows from the bottom heating space 301 of the combusting portion 300 in the direction W1 and reaches an exhaust gas flow channel 408 through an opening 432. The combustible gas or the combustion exhaust gas then flows in the exhaust gas flow channel 408 in a direction B1, which is indicated with an arrow in Fig. 4, and then discharged to outside from an exhaust opening. As Fig. 4 illustrates, the top wall 102 of the reformer 100 is formed in a flat form and not in a corrugated plate form. Accordingly, a reforming chamber 105 of the reformer 100 is advantageous in containing ceramics carriers supporting catalysts for the reforming reactions to an entire space in the reforming chamber 105.

In the fuel cell apparatus according to the third embodiment, as Fig. 4 illustrates, a wall portion 430, which is a part of the inner housing 403, is arranged at a portion in an upward direction of the top heating space 305. The wall portion 430 includes a first rib 904, which serves as a first guiding protrusion. The first rib 904 is formed such that the first rib 904 protrudes downward in a direction toward the top wall 102 of the reformer 100 from the wall portion 430 and faces the top wall 102 of the reformer 100. The first rib 904 is arranged at a position in an upward direction relative to the reformer 100, which is directly above the reformer 100. The combustible gas or the combustion exhaust gas that is guided from the bottom heating space 301 into the top heating space 305 via the side heating space 304 rises and hits the first rib 904. Then, the combustible gas or the combustion exhaust gas is guided by the first rib 904 and biased downward in a direction W3, which is indicated with an arrow. As a result, the combustible gas or the combustion exhaust gas is guided toward the top wall 102 of the reformer 100. Accordingly, the combustible gas or the combustion exhaust gas that has entered the top heating space 305 efficiently makes contact with the top wall 102 of the reformer 100. Accordingly, the first rib 904 enhances a contact state between the combustible gas or the combustion exhaust gas and the top wall 102 of the reformer 100. As a result, efficiency of the top wall 102 to receive heat is increased.

Upon the arrangement of the fuel cell apparatus according to the third embodiment described herewith, the first rib 904 makes the combustible gas or the combustion exhaust gas to flow toward the top wall 102 of the reformer 100 so that an amount of heat exchanged increases between the combustible gas or the combustion exhaust gas and the top wall 102 of the reformer 100 at the top wall 102 of the reformer 100. In other words, an amount of heat that the top wall 102 of the reformer 100 receives from the combustible gas or the combustion exhaust gas increases. Accordingly, in the reforming chamber 105 of the reformer 100, temperature of the ceramics carriers 110 arranged at a portion near the top wall 102 is maintained as high as possible so that temperature of catalysts for reforming reactions that are supported on the ceramics carriers is maintained as high as possible. Accordingly, reforming reactions of the fuel gas in the reforming chamber 105 of the reformer 100 are appropriately allowed to take place, which may result in an advantage of enhancing a hydrogen conversion rate of the fuel gas. In the fuel cell apparatus according to the third embodiment, the reforming reactions in the reformer 100 are appropriately allowed to take place so that most of the gas discharged from the reformer 100 is the gas that went through the reforming reactions. Accordingly, an amount of the reforming reactions, which are endothermic reactions, to go through in the stack 200 may be reduced and temperature in the stack 200 may be maintained at a high temperature. Accordingly, efficiency of generating electricity in the stack 200 may be increased.

In the fuel cell apparatus according to the third embodiment, the top wall 102 of the reformer 100 efficiently receives heat from the combustible gas or the combustion exhaust gas. Accordingly, temperature of the combustion exhaust gas after the combustion exhaust gas has passed the top wall 102 of the reformer 100 may be decreased as much as possible. Accordingly, the temperature of the combustion exhaust gas that is flowing in the exhaust gas flow channel 408 in the direction B1, which is indicated with an arrow, may be restrained form becoming excessively high. As a result, the exhaust gas flow channel 408 is restrained from overheating and an amount of heat discharged from the outer housing 401 to an outside environment may be decreased, which may result in enhancing efficiency of electricity generation.

In the fuel cell apparatus according to the third embodiment, as Fig. 4 illustrates, a clearance having a distance L3 is defined in the side heating space 303, a clearance having a distance L4 is defined in the side heating space 304, and a clearance having a distance L5 is defined in the top heating space 305 where the distance L5 is greater than the distance L3, which is a relationship that may be indicated as L5 > L3, and the distance L5 is greater than the distance L4, which is a relationship that may be indicated as L5 > L4. Accordingly, as described earlier, in a state where the distance L5 of the clearance in the top heating space 305 is increased, while the top heating space 305 and the cathode gas flow channel 406 are allowed to exchange heat between each other, the heat exchange between the top heating space 305 and the cathode gas flow channel 406 is restrained from becoming excessively efficient. As a result, the temperature in the top heating space 305 is maintained at a considerably high temperature, which serves to maintain the temperature in the reformer 100 at a portion near the top wall 102. Note that, also in the fuel cell apparatus according to the third embodiment, the stack 200, the reformer 100, the combusting portion 300 and the housing 400 are arranged to extend along a thickness direction of the surface where Fig. 4 is drawn. The first rib 904 and a second rib 907, which serves as a second guiding protrusion, are arranged to extend similarly. Accordingly, the first rib 904 may serve to strengthen the wall portion 430 and the second rib 907 may serve to strengthen the ceiling wall 410 so that the wall portion 430 and the ceiling wall 410 are allowed to be made thinner while restraining a size of the cathode gas flow channel 406 from changing in the radial direction.

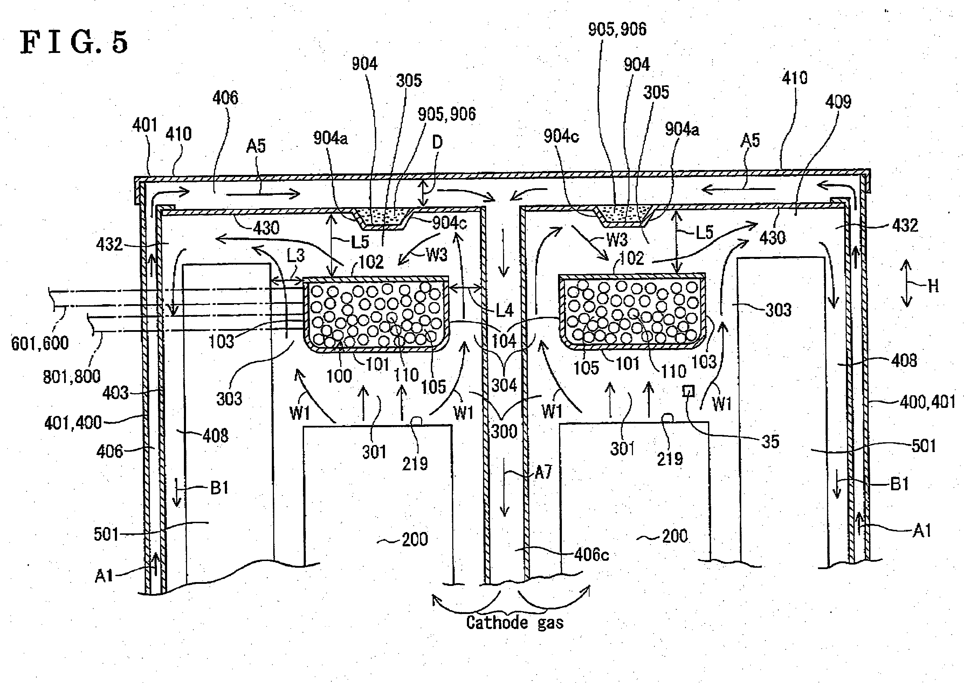

The fuel cell apparatus according to a fourth embodiment is described next. Fig. 5 is a schematic drawing illustrating a concept of the fuel cell apparatus according to the fourth embodiment. The fuel cell apparatus according to the fourth embodiment is basically arranged with a similar configuration, arranged to operate similarly, and provides similar advantages relative to the fuel cell apparatus according to the aforementioned third embodiment. In a recessed portion 905 of a first rib 904, which serves as a first guiding protrusion, a third heat insulating layer 906 that is formed of a heat insulating material is provided. Accordingly, while the first rib 904 is protruding above the top wall 102 of the reformer 100 to guide, for example, a combustion exhaust gas at high temperature in a direction W3 that is indicated with an arrow to direct the combustion exhaust gas toward the top wall 102 of the reformer 100, heat in a top heating space 305 is restrained from being transferred to a cathode gas flow channel 406 through the first rib 904, which is advantageous in maintaining temperature in the top heating space 305 as high as possible. Furthermore, the third heat insulating layer 906 is provided at a position directly above the reformer 100 alone so that a cathode gas may be preheated by transferring heat from the combustion exhaust gas to the cathode gas in the cathode gas flow channel 406 via a wall portion 430. Accordingly, temperature of the combustion exhaust gas after the combustion exhaust gas has passed the top wall 102 of the reformer 100 may be decreased. Accordingly, the temperature of the combustion exhaust gas that is flowing in the exhaust gas flow channel 408 in a direction B1, which is indicated with an arrow, is restrained from becoming excessively high. As a result, the exhaust gas flow channel 408 is restrained from overheating and an amount of heat discharged from an outer housing 401 to an outside environment may be decreased. Accordingly, efficiency of electricity generation may be enhanced.

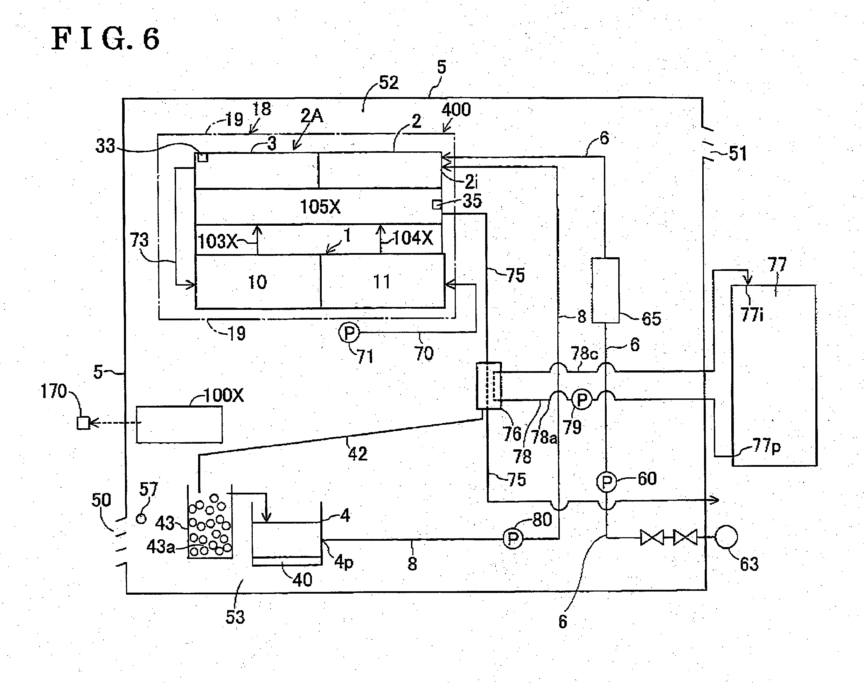

A configuration where a fuel cell apparatus according to this disclosure applies is described next. Fig. 6 is a schematic drawing illustrating a concept of a fuel cell system where the fuel cell apparatus according to this disclosure applies. As Fig. 6 illustrates, the fuel cell system includes a stack 1, an evaporating portion 2 where water vapors are generated by evaporating liquid state water, a reforming portion 3 where the water vapors generated in the evaporating portion 2 are used to reform fuel to generate an anode gas, a water tank 4 where liquid state water for supplying water to the evaporating portion 2 is stored, and a case 5 for containing the components listed herewith. The stack 1 includes an anode 10 and a cathode 11 with an ion conductor in between. A solid oxide type fuel cell, which may be abbreviated as SOFC, is an example of the stack 1, which operates at a temperature, for example, equal to or more than 400 degrees Celsius. The reforming portion 3 adjoining the evaporating portion 2 includes carriers made of ceramics or a similar material supporting reforming catalysts. The reforming portion 3 and the evaporating portion 2 forms a reformer 2A. The reformer 2A, together with the stack 1, is surrounded by a heat insulating wall 19 to form an electricity generating module 18. In the electricity generating module 18, a combusting portion 105X is provided for heating the reforming portion 3 and the evaporating portion 2. An anode exhaust gas discharged from a direction of the anode 10 is supplied to the combusting portion 105X via a flow channel 103X. A cathode exhaust gas discharged from a direction of the cathode 11 is supplied to the combusting portion 105X via a flow channel 104X. At the time of startup for the fuel cell system, a gas before reformed that is supplied from the anode 10 is burned, or combusted, with the cathode gas supplied from the cathode 11 at the combusting portion 105X to heat the evaporating portion 2 and the reforming portion 3.

In a state where electricity generation is in progress, the anode exhaust gas discharged from the anode 10 is burned at the combusting portion 105X with the cathode exhaust gas discharged from the cathode 11 to heat the evaporating portion 2 and the reforming portion 3. The combusting portion 105X is provided with an exhaust gas flow channel 75 to discharge a combustion exhaust gas, which includes a gas after combustion at the combusting portion 105X and an uncombusted gas, into air via the exhaust gas flow channel 75. The reforming portion 3 is provided with a temperature sensor 33 configured to detect temperature in the reforming portion 3. An ignition portion 35, which is a heater for starting a flame, is provided at the combusting portion 105X. The ignition portion 35 is not limited to the aforementioned heater and substituted by an item that may start a flame. The fuel cell system is provided with an outside air temperature sensor 57, which is a temperature sensor for detecting temperature of an outside air. Signals from the aforementioned temperature sensors 33, 57 are transmitted to a control portion 100X as inputs. The control portion 100X outputs a signal to initiate a warning to a warning device 170.

In a state where electricity generation is in progress, the reformer 2A is heated within the heat insulating wall 19 that provides an environment appropriate for reforming reactions to occur. In a state where electricity generation is in progress, the evaporating portion 2 is heated to heat water so that water transforms into water vapors. In a case where the stack 1 is a SOFC type, the anode exhaust gas discharged from the direction of the anode 10 and the cathode exhaust gas discharged from the direction of the cathode 11 are burned at the combusting portion 105X so that the reforming portion 3 and the evaporating portion 2 are simultaneously heated within the electricity generating module 18. As Fig. 6 illustrates, a gas flow channel 6 is a channel provided for supplying a gas from a gas source 63 to the reformer 2A and is provided with a pump 60 and a desulfurizing device 65. The cathode 11 in the stack 1 connects with a cathode gas flow channel 70 that supplies the cathode gas, which is air, to the cathode 11. The cathode gas flow channel 70 is provided with a cathode pump 71, a pump that serves as a means to deliver the cathode gas.

As Fig. 6 illustrates, the case 5 includes an intake opening 50, which communicates with outside air, and an exhaust opening 51. The case 5 further includes an upper chamber space 52, which is referred to as a first chamber, and a lower chamber space 53, which is referred to as a second chamber. The stack 1, together with the reforming portion 3 and the evaporating portion 2, forms the electricity generating module 18. The electricity generating module 18 is housed, or contained, in the upper chamber space 52, which is an upward portion of the case 5. The lower chamber space 53 of the case 5 contains the water tank 4 where liquid state water used for reforming reactions at the reforming portion 3 is stored. The water tank 4 is provided with a heating portion 40 having a heating function. An electric heater is an example of the heating portion 40. The heating portion 40 heats water stored in the water tank 4, Accordingly, the heating portion 40 is formed with an electric heater or a similar device. In a state where an ambient temperature, for example an outside air temperature, is low, the heating portion 40 heats water in the water tank 4 to a temperature equal to or more than a predetermined temperature by following an instruction from the control portion 100X so that water is restrained from becoming ice. As Fig. 6 illustrates, a piping for communicating an outlet port 4p of the water tank 4 in the lower chamber space 53 with an inlet port 2i of the evaporating portion 2 in the upper chamber space 52 is provided in the case 5. A water supply flow channel 8 is a flow channel for supplying water stored in the water tank 4 to the evaporating portion 2. The water supply flow channel 8 is provided with a pump 80 that serves as a means for delivering water in the water tank 4 to the evaporating portion 2. Moreover, the control portion 100X controls pumps 80, 71, 79, 60 in the fuel cell system.

At the time of startup for the fuel cell system, in a state where the pump 60 is driven to operate, a gas from the gas source 63 flows through a gas flow channel 6 into the combusting portion 105X via the evaporating portion 2, the reforming portion 3, an anode gas flow channel 73, the anode 10 of the stack 1, and the flow channel 103X in that order. The cathode pump 71 works to flow the cathode gas, which is air, to the combusting portion 105X via the cathode gas flow channel 70, the cathode 11, and the flow channel 104X in that order. Igniting the ignition portion 35 in this state results in a combustion at the combusting portion 105X so that the reforming portion 3 and the evaporating portion 2 are heated. In the state where the reforming portion 3 and the evaporating portion 2 are applied with heat, and the pump 80 is driven to operate, the water in the water tank 4 is delivered through the water supply flow channel 8 from the outlet port 4p of the water tank 4 toward the inlet port 2i of the evaporating portion 2. At the evaporating portion 2, the water is heated to become water vapors. The water vapors move to the reforming portion 3 together with a gas supplied from the gas flow channel 6. The gas is reformed by the water vapors at the reforming portion 3 and becomes an anode gas, which is a gas containing hydrogen. The anode gas is supplied to the anode 10 of the stack 1 via the anode gas flow channel 73. In addition, the cathode gas, which is a gas containing oxygen, which is air in the case 5, is supplied to the cathode 11 of the stack 1 via the cathode gas flow channel 70. As a result, the stack 1 generates electricity. An anode off gas discharged from the anode 10 and a cathode off gas discharged from the cathode 11 reaches the combusting portion 105X via the flow channel 103X and the flow channel 104X respectively, and then burned at the combusting portion 105X. An exhaust gas at high temperature is discharged out of the case 5 through the exhaust gas flow channel 75.

In a state where electricity generation is in progress in the fuel cell system and the pump 80 is driven to operate, the water in the water tank 4 is delivered through the water supply flow channel 8 from the outlet port 4p of the water tank 4 toward the inlet port 2i of the evaporating portion 2. At the evaporating portion 2, the water is heated to become water vapors. The water vapors move to the reforming portion 3 together with the gas supplied from the gas flow channel 6. The gas, or a fuel, is reformed by the water vapors at the reforming portion 3 and becomes the anode gas, the gas containing hydrogen. In a case where the fuel is methane series, the anode gas generated by reforming with the water vapors is considered as a result of following formula (1). Note that the fuel is not limited to methane series.

(1) CH₄ + 2H₂O → 4H₂ + CO₂

CH₄ + H₂O → 3H₂ + CO

The anode gas that is generated is supplied to the anode 10 of the stack 1 via the anode gas flow channel 73. In addition, the cathode gas, which is the gas containing oxygen, which is air in the case 5, is supplied to the cathode 11 of the stack 1 via the cathode gas flow channel 70. As a result, the stack 1 generates electricity. The exhaust gas at high temperature discharged from the stack 1 is discharged out of the case 5 through the exhaust gas flow channel 75.

The exhaust gas flow channel 75 is provided with a heat exchanger 76 having a condensing function. Between the heat exchanger 76 and a hot water reservoir 77, a stored hot water flow channel 78 that connects to the hot water reservoir 77 and a hot water reservoir pump 79 are provided. The stored hot water flow channel 78 includes an outward channel 78a and a return channel 78c. In a state where the hot water reservoir pump 79 is at work, low temperature water in the hot water reservoir 77 is discharged from a discharge port 77p of the hot water reservoir 77. The low temperature water is delivered through the outward channel 78a, reaches the heat exchanger 76, and heated by the heat exchanger 76. Hot water heated by the heat exchanger 76 returns to the hot water reservoir 77 from the return port 77i via the return channel 78c. Accordingly, the water in the hot water reservoir 77 is changed to the hot water. The water vapors contained in the aforementioned exhaust gas from the stack 1 is condensed by the heat exchanger 76 and become condensed water. The condensed water is supplied to a water purifier 43 by gravity, or by other methods, via a condensed water flow channel 42 that is arranged to extend from the heat exchanger 76. The water purifier 43 includes a water purifying agent 43a, for example an ion exchange resin, so that impure substances in the condensed water are removed. Water with impure substances removed moves to the water tank 4 and stored in the water tank 4. In a state where the pump 80 starts operating, the water in the water tank 4 is supplied to the evaporating portion 2 at high temperature via the water supply flow channel 8. The water is then changed to water vapors at the evaporating portion 2, supplied to the reforming portion 3, and then consumed in the reforming reaction that reforms the fuel at the reforming portion 3. Fig. 6 illustrates a fuel cell system purely as a concept, where a structure described in Fig. 3, Fig. 4, or Fig. 5 applies to the structure around the reformer 2A.

The fuel cell apparatus according to this disclosure is not limited to a particular embodiment described herewith or shown as a drawing herewith. The configuration where the fuel cell apparatus according to this disclosure applies is not limited to a particular configuration described herewith or shown as a drawing herewith. The fuel cell apparatus according to this disclosure may be modified within a range where an essence of the fuel cell apparatus according to this disclosure upholds. The fuel cell may be a type different from a solid oxide type fuel cell. A solid polymer electrolyte type fuel cell, a phosphoric acid type fuel cell, and a molten carbonate type fuel cell are examples of the type of the fuel cell. Fuel supplied to a reformer is not limited to a particular type. The fuel may be selected from, for example, a city gas, a propane gas, a biogas, an LPG gas, a CNG gas, and kerosene.

## Claims

1. A fuel cell apparatus, comprising:
a reformer (100) including a bottom wall (101), a top wall (102) facing the bottom wall (101), a side wall (103, 104) connecting the bottom wall (101) and the top wall (102), an evaporating portion (120) generating water vapors, and a reforming chamber (105) generating an anode gas containing hydrogen by reforming a fuel by the water vapors;
a stack (200) generating electricity in a state where the stack (200) is supplied with the anode gas generated in the reforming chamber (105) and a cathode gas;
a combusting portion (300) heating the reformer (100) to a temperature region suitable for a reforming reaction to take place either by burning a combustible gas or by allowing a combustion exhaust gas that is a burned combustible gas to pass through, the combusting portion (300) forming a bottom heating space (301) facing the bottom wall (101) of the reformer (100) and heating the bottom wall (101), a side heating space (303, 304) facing the side wall (103, 104) of the reformer (100) and heating the side wall (103, 104), and a top heating space (305) facing the top wall (102) of the reformer (100) and heating the top wall (102); and
a first guiding portion (900, 430) arranged above the reformer (100) and facing the top wall (102) of the reformer (100), the first guiding portion (900, 430) including a first guiding protrusion (901, 904) protruding in a direction approaching toward the top wall (102) of the reformer (100).

2. The fuel cell apparatus according to Claim 1, further comprising:
a wall portion (430) arranged above the top heating space (305) and serving as the first guiding portion (430);
the wall portion (430) serving as a flow channel forming member forming a cathode gas flow channel (406) delivering an outside air serving as the cathode gas toward the stack (200); and
the wall portion (430) configured to transfer heat in the top heating space (305) to the cathode gas flow channel (406) by allowing heat exchange between the top heating space (305) and the cathode gas flow channel (406).

3. The fuel cell apparatus according to Claim 2, further comprising:
a ceiling wall (410) arranged above the wall portion (430);
the cathode gas flow channel (406) formed by an inner surface of the ceiling wall (410) and an outer surface of the wall portion (430); and
a second guiding protrusion (907) formed on the ceiling wall (410) and protruding toward the wall portion (430) in a cross section taken along a direction (A1, A5, A7) of a flow in the cathode gas flow channel (406) and along a height direction (H) of the reformer (100), wherein
the second guiding protrusion (907) is arranged at a position at an upstream side of the flow in the cathode gas flow channel (406) relative to the first guiding protrusion (904), and wherein
the second guiding protrusion (907) is configured to bias the cathode gas flowing in the cathode gas flow channel (406) in a direction that makes the cathode gas to flow away from the first guiding protrusion (904) in a radial direction (D) of the cathode gas flow channel (406) at the position at the upstream side of the flow in the cathode gas flow channel (406) relative to the first guiding protrusion (904).

4. The fuel cell apparatus according to any one of Claims 1 through 3, wherein the top wall (102) of the reformer (100) is formed in a flat form.

## Patentansprüche

1. Brennstoffzellenvorrichtung, mit:
einem Reformer (100), der eine Bodenwand (101), eine der Bodenwand (101) zugewandte Deckwand (102), eine die Bodenwand (101) und die Deckwand (102) verbindende Seitenwand (103, 104), einen Wasserdämpfe erzeugenden Verdampfungsabschnitt (120) und eine Reformierkammer (105) aufweist, die durch Reformieren eines Brennstoffs durch die Wasserdämpfe ein wasserstoffhaltiges Anodengas erzeugt;
einem Stapel (200), der in einem Zustand, in dem der Stapel (200) mit dem in der Reformierkammer (105) erzeugten Anodengas und einem Kathodengas versorgt wird, Elektrizität erzeugt;
einem Verbrennungsabschnitt (300), der den Reformer (100) auf einen Temperaturbereich erwärmt, der dafür geeignet ist, eine Reformierreaktion stattfinden zu lassen, entweder indem ein brennbares Gas verbrannt wird oder indem ein Verbrennungsabgas, das ein verbranntes brennbares Gas ist, hindurchgehen gelassen wird, wobei der Verbrennungsabschnitt (300) einen der Bodenwand (101) des Reformers (100) zugewandten und die Bodenwand (101) heizenden Bodenheizraum (301), einen der Seitenwand (103, 104) des Reformers (100) zugewandten und die Seitenwand (103, 104) heizenden Seitenheizraum (303, 304) und einen der Deckwand (102) des Reformers (100) zugewandten und die Deckwand (102) heizenden Deckheizraum (305) ausbildet; und
einem ersten Führungsabschnitt (900, 430), der oberhalb des Reformers (100) angeordnet ist und der Deckwand (102) des Reformers (100) zugewandt ist, wobei der erste Führungsabschnitt (900, 430) einen ersten Führungsvorsprung (901, 904) aufweist, der in einer sich der Deckwand (102) des Reformers (100) nähernden Richtung vorspringt.

2. Brennstoffzellenvorrichtung nach Anspruch 1, mit außerdem:
einem Wandabschnitt (430), der oberhalb des Deckheizraums (305) angeordnet ist und als der erste Führungsabschnitt (430) dient;
dem Wandabschnitt (430), der als ein Strömungskanalausbildungselement dient, das einen Kathodengasströmungskanal (406) ausbildet, der Außenluft, die als das Kathodengas dient, zum Stapel (200) hinliefert; und
dem Wandabschnitt (430), der so gestaltet ist, dass er Wärme in dem Deckheizraum (305) zum Kathodengasströmungskanal (406) überträgt, indem er einen Wärmeaustausch zwischen dem Deckheizraum (305) und dem Kathodengasströmungskanal (406) zulässt.

3. Brennstoffzellenvorrichtung nach Anspruch 2, mit außerdem:
einer Deckenwand (410), die oberhalb des Wandabschnitts (430) angeordnet ist;
dem Kathodengasströmungskanal (406), der durch eine Innenfläche der Deckenwand (410) und einer Außenfläche des Wandabschnitts (430) ausgebildet ist; und
einem zweiten Führungsvorsprung (907), der auf der Deckenwand (410) ausgebildet ist und in einem Querschnitt entlang einer Richtung (A1, A5, A7) einer Strömung in dem Kathodengasströmungskanal (406) und entlang einer Höhenrichtung (H) des Reformers (100) zum Wandabschnitt (430) hin vorspringt, wobei
der zweite Führungsvorsprung (907) bezogen auf den ersten Führungsvorsprung (904) an einer Position an einer stromaufwärtigen Seite der Strömung in dem Kathodengasströmungskanal (406) angeordnet ist und wobei
der zweite Führungsvorsprung (907) so gestaltet ist, dass er das in dem Kathodengasströmungskanal (406) strömende Kathodengas in einer Richtung ausrichtet, die das Kathodengas bezogen auf den ersten Führungsvorsprung (904) an der Position an der stromaufwärtigen Seite der Strömung in dem Kathodengasströmungskanal (406) in einer radialen Richtung (D) des Kathodengasströmungskanals (406) von dem ersten Führungsvorsprung (904) wegströmen lässt.

4. Brennstoffzellenvorrichtung nach einem der Ansprüche 1 bis 3, wobei die Deckwand (102) des Reformers (100) in einer flachen Form ausgebildet ist.

## Revendications

1. Appareil de pile à combustible, comprenant :
un reformeur (100) comportant une paroi inférieure (101), une paroi supérieure (102) faisant face à la paroi inférieure (101), une paroi latérale (103, 104) reliant la paroi inférieure (101) et la paroi supérieure (102), une partie d'évaporation (120) générant des vapeurs d'eau, et une chambre de reformage (105) générant un gaz anodique contenant de l'hydrogène par le reformage d'un combustible par les vapeurs d'eau ;
un empilement (200) générant de l'électricité dans un état où l'empilement (200) est alimenté en gaz anodique généré dans la chambre de reformage (105) et en gaz cathodique ;
une partie de combustion (300) chauffant le reformeur (100) à une zone de température appropriée pour qu'une réaction de reformage ait lieu soit en brûlant un gaz combustible ou en permettant à un gaz d'échappement de combustion qui est un gaz combustible brûlé de passer à travers, la partie de combustion (300) formant un espace de chauffage inférieur (301) faisant face à la paroi inférieure (101) du reformeur (100) et chauffant la paroi inférieure (101), un espace de chauffage latéral (303, 304) faisant face à la paroi latérale (103, 104) du reformeur (100) et chauffant la paroi latérale (103, 104), et un espace de chauffage supérieur (305) faisant face à la paroi supérieure (102) du reformeur (100) et chauffant la paroi supérieure (102) ; et
une première partie de guidage (900, 430) agencée au-dessus du reformeur (100) et faisant face à la paroi supérieure (102) du reformeur (100), la première partie de guidage (900, 430) comportant une première saillie de guidage (901, 904) faisant saillie dans une direction de rapprochement vers la paroi supérieure (102) du reformeur (100).

2. Appareil de pile à combustible selon la revendication 1, comprenant en outre :
une partie de paroi (430) agencée au-dessus de l'espace de chauffage supérieur (305) et servant de première partie de guidage (430) ;
la partie de paroi (430) servant d'élément formant un canal d'écoulement qui forme un canal d'écoulement de gaz cathodique (406) distribuant de l'air extérieur servant de gaz cathodique vers l'empilement (200) ; et
la partie de paroi (430) configurée pour transférer de la chaleur dans l'espace de chauffage supérieur (305) au canal d'écoulement de gaz cathodique (406) en permettant l'échange de la chaleur entre l'espace de chauffage supérieur (305) et le canal d'écoulement de gaz cathodique (406).

3. Appareil de pile à combustible selon la revendication 2, comprenant en outre :
une paroi de plafond (410) agencée au-dessus de la partie de paroi (430) ;
le canal d'écoulement de gaz cathodique (406) formé par une surface intérieure de la paroi de plafond (410) et une surface extérieure de la partie de paroi (430) ; et
une deuxième saillie de guidage (907) formée sur la paroi de plafond (410) et faisant saillie vers la partie de paroi (430) selon une coupe transversale prise le long d'une direction (A1, A5, A7) d'un écoulement dans le canal d'écoulement de gaz cathodique (406) et le long d'une direction de hauteur (H) du reformeur (100), où
la deuxième saillie de guidage (907) est agencée à une position au niveau d'un côté amont de l'écoulement dans le canal d'écoulement de gaz cathodique (406) par rapport à la première saillie de guidage (904), et où
la deuxième saillie de guidage (907) est configurée pour solliciter le gaz cathodique s'écoulant dans le canal d'écoulement de gaz cathodique (406) dans une direction qui permet au gaz cathodique de s'écouler loin de la première saillie de guidage (904) dans une direction radiale (D) du canal d'écoulement de gaz cathodique (406) à la position au niveau du côté amont de l'écoulement dans le canal d'écoulement de gaz cathodique (406) par rapport à la première saillie de guidage (904).

4. Appareil de pile à combustible selon l'une quelconque des revendications 1 à 3, dans lequel la paroi supérieure (102) du reformeur (100) se présente sous une forme plate.
